# EUROPÄISCHE PATENTANMELDUNG

(11) **EP 1 160 700 A2**
(43) Veröffentlichungstag der Anmeldung: **05.12.2001**
(21) Anmeldenummer: 01105593.6
(22) Anmeldetag: 06.03.2001
(51) Int. Cl.: G06F 17/60

(54) **Maklereinrichtung und Maklersystem**

(30) Priorität: 12.05.2000 DE 10023359
(71) Anmelder: SIEMENS AKTIENGESELLSCHAFT, 80333 München (DE)
(72) Erfinder: Hähle, Jörg, 81377 München (DE)

(57) **Zusammenfassung**

Die an ein Sprachkommunikationsnetz (SKN) anschließbare Maklereinrichtung (ME) verfügt über Aufnahmemittel (ST, SST, DBS) zum sprachmenügesteuerten Aufnehmen von Angebotsinformationen (AT) beliebiger über das Sprachkommunikationsnetz (SKN) anrufender Anbieter und über eine Datenbank (DB) zum Abspeichern der Angebotsinformationen (AT). Weiterhin weist die Maklereinrichtung (ME) Abfragemittel (ST, SST, DBS) zum sprachmenügesteuerten Abfragen von in der Datenbank (DB) gespeicherten Angebotsinformationen (AT) durch beliebige über das Sprachkommunikationsnetz (SKN) anrufende Interessenten auf.

## Beschreibung

Die Erfindung betrifft eine Maklereinrichtung und ein Maklersystem zum Vermitteln von Angeboten verschiedener Anbieter an Interessenten für diese Angebote. Als Angebote können in diesem Zusammenhang beliebige geschäftliche oder private Angebote angesehen werden, wie z.B. Verkaufs-, Vermietungs- oder Kaufangebote für Güter beliebiger Art.

Allgemein bekannt sind Maklersysteme, die auf Internetservern implementiert sind. Üblicherweise werden von solchen Maklersystemen Webseiten bereitgestellt, in die verschiedene Anbieter ihre Angebote, gegebenenfalls direkt über das Internet eintragen können. Durch Abrufen dieser Webseiten über das Internet können dann beliebige Interessenten, die von den Anbietern eingetragenen Angebotsinformationen abrufen.

Ein Abruf der Angebotsinformationen erfordert jedoch interessentenseitig eine aufwendige Hardwareausstattung mit implementiertem Internetzugang, worüber nicht jedermann verfügt. Ein Internetzugang wird gegenwärtig am häufigsten durch ortsfest installierte Personalcomputer realisiert. Um Angebotsinformationen unabhängig vom gegenwärtigen Aufenthaltsort, z.B. auf Geschäftsreisen abrufen zu können, ist ein zusätzlicher, mobiler Internetzugang z.B. über einen Laptopcomputer oder ein WAP-fähiges (WAP: wireless application protocol) Mobilfunkgerät erforderlich.

Laptopcomputer sind gegenwärtig allerdings noch verhältnismäßig teuer und unhandlich. Zudem ist zum Zugreifen auf das Internet ein Anschluß an ein Zubringer-Kommunikationsnetz erforderlich. Ein Abrufen von im Internet hinterlegten Angebotsinformationen von unterwegs aus, z.B. um sich vor Ort über freie Hotelzimmer zu informieren, ist damit nur sehr eingeschränkt möglich.

Dagegen erlaubt ein WAP-fähiges Mobilfunkgerät auch von unterwegs aus einen direkten Internetzugriff; allerdings nur auf dem WAP-Protokoll entsprechende Webseiten. Gegenwärtig ist jedoch der Anteil WAP-konformer Webseiten im Internet und der darüber abrufbaren Angebote noch sehr gering.

Es ist Aufgabe der vorliegenden Erfindung eine Maklereinrichtung und ein Maklersystem anzugeben, mit dem auf einfache Weise von verschiedenen Anbietern stammende Angebotsinformationen aufgenommen und von verschiedenen Interessenten abgefragt werden können.

Gelöst wird diese Aufgabe durch eine Maklereinrichtung gemäß Patentanspruch 1 und ein Maklersystem gemäß Patentanspruch 15.

Durch eine erfindungsgemäße Maklereinrichtung oder ein erfindungsgemäßes Maklersystem können Angebotsinformationen beliebiger über ein Sprachkommunikationsnetz anrufender Anbieter aufgenommen werden. Die aufgenommenen Angebotsinformationen können dann jeweils von beliebigen Interessenten durch einfaches Anrufen über das Sprachkommunikationsnetz abgefragt werden. Die Aufnehmen und Abfragen der Angebotsinformationen erfolgt sprachmenügesteuert; d.h. zu einem jeweiligen Anrufer werden Menüinformationen in gesprochener oder durch eine Sprachsynteseeinrichtung erzeugter Form übermittelt. Anhand der übermittelten Menüinformationen kann der Anrufer eine oder mehrere Menüoptionen, z.B. durch eine Eingabe am Bedienfeld seines Endgerätes oder durch eine von ihm gesprochene Spracheingabe, d.h. durch aktive Sprachsteuerung, auswählen.

Ein wesentlicher Vorteil der Erfindung besteht darin, dass sowohl Anbieter als auch Interessenten die Maklereinrichtung auf besonders einfache Weise über ein Sprachkommunikationsnetz, wie z.B. ein öffentliches Telefonnetz oder ein Mobilfunknetz, nutzen können. So kann beispielsweise ein Interessent mittels eines herkömmlichen mobilen Endgerätes auch von vom Auto aus bei einer erfindungsgemäßen Maklereinrichtung anrufen, um dort z.B. Zimmerangebote von in der Nähe befindlichen Hotels abzurufen.

Eine erfindungsgemäße Maklereinrichtung erfordert ferner nur einen sehr geringen Administrationsaufwand, da sowohl die Aufnahme von Angeboten als auch deren Abruf im wesentlichen automatisch erfolgt.

Vorteilhafte Ausführungsformen und Weiterbildungen der Erfindung sind in den abhängigen Ansprüchen angegeben.

Gemäß einer vorteilhaften Weiterbildung der Erfindung können die Angebotsinformationen in der Datenbank der Maklereinrichtung in unterschiedliche Angebotskategorien, wie z.B. Hotelzimmerangebote, Gebrauchtwagenangebote, Wohnungsangebote etc., eingeteilt werden. Die Angebotskategorien können z.B. vom Betreiber der Maklereinrichtung vorgegeben werden oder auch von Anbietern, ggf. menügesteuert eingerichtet werden. Zum Aufnehmen bzw. Abfragen von Angebotsinformationen einer bestimmten Angebotskategorie kann durch die Maklereinrichtung vom betreffenden Anbieter bzw. Interessenten eine die Angebotskategorie identifizierende Auswahlinformation sprachmenügesteuert abgefragt werden.

Gemäß einer Weiterbildung der Erfindung kann die Maklereinrichtung Lokalisierungsmittel zum Erfassen des Aufenthaltsortes eines Anrufers und zum Steuern der Maklereinrichtung abhängig vom erfaßten Aufenthaltsort des Anrufers aufweisen. Eine Lokalisierung des Anrufers kann bei einem Anruf über ein Festnetz beispielsweise anhand der zur Maklereinrichtung übertragenen Ortsvorwahlnummer des Anrufers erfolgen. Bei Anrufen über ein Mobilfunknetz kann der Bezirk in dem sich das benutzte Mobilfunkendgerät in das Mobilfunknetz eingebucht hat, anhand der übermittelten Rufnummer des Mobilfunkendgerätes durch die Maklereinrichtung aus dem Mobilfunknetz abgefragt werden. Weiterhin können zur Ermittlung des Aufenthaltsorts des Anrufers auch Daten eines GPS-Empfängers (GPS: global possitioning system) des Anrufers durch die Maklereinrichtung abgefragt und ausgewertet werden. Die Angebotsinformationen können dann abhängig vom ermittelten Aufenthaltsort eines Anrufers aufgenommen bzw. abgefragt werden. Auf diese Weise können beispielsweise einem Interessenten bevorzugt für dessen Aufenthaltsort relevante Angebote oder nach der Entfernung zu seinem Aufenthaltsort sortierte Angebote zur Auswahl angeboten werden.

Nach einer weiteren vorteilhaften Ausführungsform der Erfindung kann die Maklereinrichtung Authentifizierungsmittel zum Prüfen einer von einem anrufenden Anbieter einzugebenden Authentifizierungsinformation, z.B. einer sog. PIN-Nummer (PIN: personal identification number), aufweisen. Die Authentifizierungsinformation ist dabei vom Anbieter einzugeben, um einen schreibenden und/oder modifizierenden Zugriff auf die Datenbank der Maklereinrichtung veranlassen zu können. Gegebenenfalls kann auch eine Authentifizierung von anrufenden Interessenten vorgesehen sein; beispielsweise um anrufenden Interessenten jeweils nach Eingabe einer entsprechenden Authentifizierungsinformation einen vorzugsweise lesenden Zugriff auf nicht öffentlich zugängliche Angebote freizugeben.

Nach einer weiteren vorteilhaften Weiterbildung kann die Maklereinrichtung über Erfassungsmittel zum Erfassen von Anschlußidentifizierungsinformationen, z.B. Rufnummern von Anrufern und über eine Datenbank, in der einer jeweiligen Anrufidentifizierungsinformation eines Anrufers eine individuelle Benutzerprofilinformation zugeordnet ist, verfügen. Dadurch kann die Maklereinrichtung nach Erfassung der Anschlußidentifizierungsinformation eines Anrufers auf die jeweils zugeordnete Benutzerprofilinformation zugreifen, und abhängig davon Angebotsinformationen aufnehmen bzw. abfragen. Auf diese Weise kann einem Interessenten, der durch seine erfaßte Anschlußidentifizierungsinformation identifiziert wird, ein speziell auf diesen Interessenten zugeschnittenes Angebotsspektrum zur Auswahl angeboten werden.

Nach einer weiteren vorteilhaften Ausgestaltung der Erfindung kann nach Auswahl eines Angebots durch einen Interessenten unmittelbar eine Verbindung zum Anbieter dieses Angebots durch die Maklereinrichtung aufgebaut werden. Alternativ dazu kann eine Rufnummer des Anbieters zum Interessenten übermittelt werden.

Weiterhin können für die Maklereinrichtung Protokollierungsmittel vorgesehen sein, mit deren Hilfe Zugriffe auf Angebotsinformationen eines Anbieters protokolliert werden. Die protokollierten Zugriffsinformationen können dann durch den betreffenden Anbieter, ggf. nach Eingabe einer Authentifizierungsinformation abgefragt werden. Der Anbieter kann sich auf diese Weise über die Nachfrage nach seinen Angeboten informieren.

Ein Ausführungsbeispiel der Erfindung wird nachfolgend anhand der Zeichnung näher erläutert.

### Dabei zeigen jeweils in schematischer Darstellung:

- FIG 1: eine an ein Sprachkommunikationsnetz angeschlossene Maklereinrichtung beim Aufnehmen eines Angebots eines über das Sprachkommunikationsnetz anrufenden Anbieters,
- FIG 2: dieselbe Maklereinrichtung beim Abfragen eines Angebots durch einen über das Sprachkommunikationsnetz anrufenden Interessenten,
- FIG 3: ein Ablaufdiagramm zur Veranschaulichung eines typischen Vorgangs zur Aufnahme eines Angebots, und
- FIG 4: ein Ablaufdiagramm zur Veranschaulichung eines typischen Vorgangs zur Angebotsabfrage.

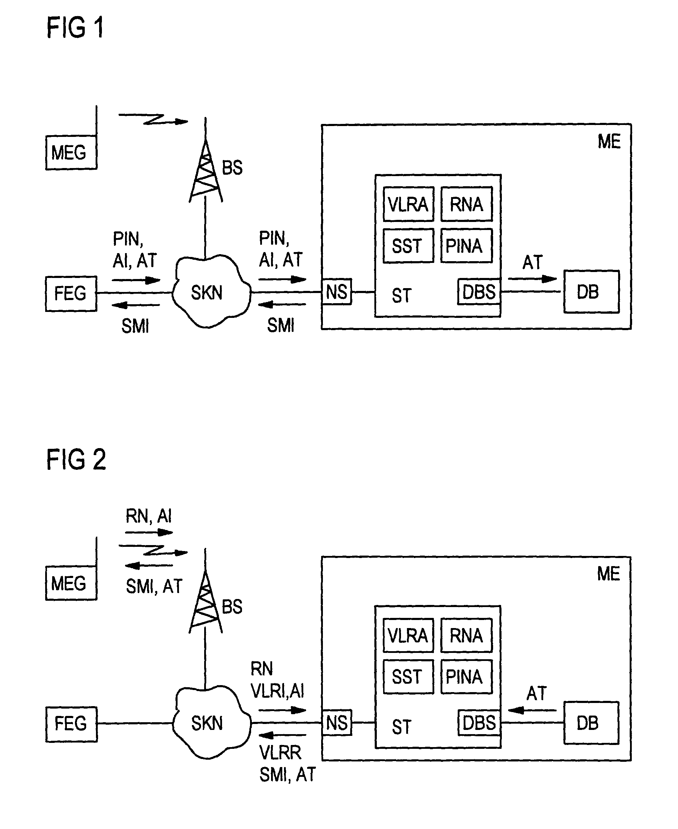

Die FIG 1 und 2 zeigen jeweils eine an ein Sprachkommunikationsnetz SKN, z.B. ein öffentliches Telefonnetz, angeschlossene Maklereinrichtung ME. Der Maklereinrichtung ME, die beispielsweise als sog. Call-Server realisiert sein kann, ist eine Rufnummer zugeordnet, mittels der die Maklereinrichtung ME über das Sprachkommunikationsnetz SKN angerufen werden kann. Ein solcher Anruf kann von beliebigen mit dem Sprachkommunikationsnetz SKN verbindbaren Endgeräten aus erfolgen. Als Beispiel für solche Endgeräte sind in den FIG 1 und 2 ein an das Sprachkommunikationsnetz SKN angeschlossenes Festnetzendgerät FEG sowie ein mobiles Endgerät MEG dargestellt. Das mobile Endgerät MEG ist dabei - wie durch einen stilisierten Blitz angedeutet - drahtlos mit einer Mobilfunkbasisstation BS koppelbar, die ihrerseits an das Sprachkommunikationsnetz SKN gekoppelt ist.

Die Maklereinrichtung ME weist als Funktionskomponenten eine Steuereinrichtung ST, eine mit dieser verbundene Datenbank DB sowie eine ebenfalls mit der Steuereinrichtung ST verbundene Netzschnittstelle NS auf. Über die Netzschnittstelle NS ist die Steuereinrichtung ST an das Sprachkommunikationsnetz SKN gekoppelt. Die Steuereinrichtung ST verfügt ihrerseits über eine Datenbankschnittstelle DBS, über die die Datenbank DB angeschlossen ist, eine Sprachmenüsteuereinrichtung SST, eine Rufnummernauswerteeinrichtung RNA, eine VLR-Auswerteeinrichtung VLRA (VLR: visitor location register) sowie eine PIN-Auswerteeinrichtung PINA (PIN: personal identification number).

FIG 1 zeigt die Maklereinrichtung ME beim Aufnehmen eines Angebots eines von einem beliebigen Endgerät, hier das Festnetzendgerät FEG, anrufenden Anbieters. Der Anbieter wählt zu diesem Zweck die Rufnummer der Maklereinrichtung ME, woraufhin eine Verbindung vom Festnetzendgerät FEG über das Sprachkommunikationsnetz SKN zur Maklereinrichtung ME aufgebaut wird. Nach einer besonders vorteilhaften Ausgestaltungsform der Erfindung, ist die Maklereinrichtung ME unter einer, z.B. landes-, europa- oder weltweit, einheitlichen Rufnummer erreichbar. Es kann weiterhin vorgesehen sein, dass eine im Zuge des Verbindungsaufbaus zur Maklereinrichtung ME übermittelte Rufnummer des Anbieters von der Rufnummernauswerteeinrichtung RNA ausgewertet wird, um den Aufenthaltsort des Anbieters z.B. anhand der Ortsvorwahl dieser Rufnummer zu ermitteln. Nach erfolgter Lokalisierung des Anbieters kann dessen Anruf durch die Maklereinrichtung ME zu einer für den Aufenthaltsort des Anbieters zuständigen, lokalen Maklereinrichtung (nicht dargestellt) weiter vermittelt werden. Im Folgenden sei der Übersichtlichkeit halber angenommen, dass die Maklereinrichtung ME bereits die für den Aufenthaltsort des Anbieters zuständige Maklereinrichtung ist.

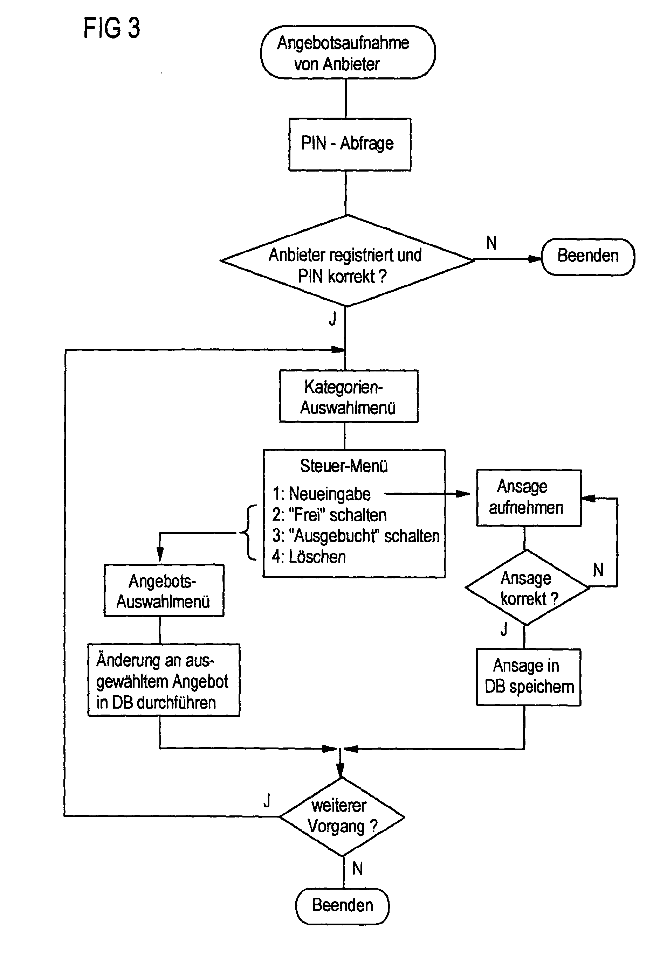

Ergänzend zu FIG 1 wird durch FIG 3 der Ablauf einer typischen Angebotsaufnahme des Anbieters durch ein Ablaufdiagramm veranschaulicht. Nach dem Aufbau der Verbindung zwischen dem Anbieter und der Maklereinrichtung ME wird durch die Steuereinrichtung ST eine Abfrage einer vom Anbieter einzugebenden Authentifizierungsinformation in Form einer sog. PIN-Nummer PIN veranlaßt. Anhand der vom Anbieter daraufhin eingegebenen PIN-Nummer PIN wird von der PIN-Auswerteeinrichtung PINA überprüft, ob der Anbieter bei der Maklereinrichtung ME registriert ist und ob die PIN-Nummer PIN korrekt ist. Bei negativem Prüfungsergebnis wird die Verbindung ggf. nach Ausgabe einer entsprechenden Ansage beendet.

Eine Registrierung eines neuen Anbieters kann auf vielfältige Weise erfolgen. Beispielsweise durch schriftlichen Antrag beim Betreiber der Maklereinrichtung, durch Anmeldung über eine Internetwebseite des Betreibers oder durch vorherigen Anruf der Maklereinrichtung ME und einer sprachmenügesteuerten Anmeldung. Bei einer Anmeldung oder Registrierung eines neuen Anbieters wird diesem eine eindeutige, anbieterindividuelle PIN-Nummer zugewiesen, die in Folge beim Aufnehmen oder Modifizieren eines Angebots jeweils einzugeben ist.

Nach einer erfolgreichen Authentifizierung des Anbieters durch die eingegebene PIN-Nummer PIN wird der Anbieter durch die Sprachmenüsteuereinrichtung SST durch ein Kategorienauswahlmenü geführt. Die Menüführung erfolgt dergestalt, dass durch die Sprachmenüsteuereinrichtung SST die alternativ auswählbaren Einträge des Auswahlmenüs als Sprachmenüinformation SMI in Form gesprochener oder synthetisierter Sprache zum Anbieter ausgegeben wird. Der Anbieter kann einen Menüeintrag daraufhin z.B. durch Drücken einer Taste am Bedienfeld seines Endgerätes oder durch Spracheingabe auswählen. Eine Spracheingabe des Anbieters kann durch eine Spracherkennungseinrichtung in der Sprachmenüsteuereinrichtung SST ausgewertet werden.

Durch die Sprachmenüsteuereinrichtung SST wird der Anbieter zunächst zur Auswahl der Kategorie, der das aufzunehmende Angebot angehört, veranlaßt. Dabei können ganz unterschiedliche Angebotskategorien, wie z.B. freie Hotelzimmer, freie Parkplätze in Parkhäusern, Gebrauchtwagen etc. vorgesehen sein. Für das vorliegende Ausführungsbeispiel sei angenommen, dass der Anbieter freie Hotelzimmer anbieten möchte. Nach der Auswahl der entsprechenden Angebotskategorie kann der Anbieter ggf. noch durch ein oder mehrere Auswahlmenüs zur Auswahl von Unterkategorien geführt werden. Eine Auswahl einer Angebotskategorie oder -unterkategorie kann auch abhängig von der eingegebenen PIN-Nummer PIN erfolgen.

Danach gelangt der Anbieter in ein Steuermenü, das ggf. abhängig von der jeweils ausgewählten Kategorie bzw. Unterkategorie die Menüeinträge '1 : Neueingabe', '2 : "Frei" schalten', '3 : "Ausgebucht" schalten' und '4 : Löschen' umfaßt. Diese Menüeinträge werden durch die Sprachmenüsteuereinrichtung SST dem Anbieter vorgelesen, der daraufhin durch Drücken einer der Tasten 1 bis 4 an seinem Festnetzendgerät FEG bzw. durch Spracheingabe einer der Zahlen 1 bis 4 einen Menüpunkt auswählt. Hierbei werden eine die gedrückte Taste identifizierende Signalisierungsinformation bzw. die vom Anbieter gesprochene Zahl als Auswahlinformation AI zur Steuereinrichtung ST übermittelt.

Bei Auswahl des Menüpunktes '1: Neueingabe' wird der Anbieter aufgefordert, einen sein Angebot spezifizierenden Ansagetext AT zu sprechen, der durch die Steuereinrichtung ST aufgezeichnet wird. Anschließend wird der aufgezeichnete Ansagetext zur Kontrolle zum Anbieter ausgegeben und dessen Einverständnis mit diesem Ansagetext sprachmenügesteuert abgefragt. Bei vorliegendem Einverständnis wird der Ansagetext AT in der Datenbank DB gespeichert. Andernfalls wird ein neuer Ansagetext aufgezeichnet. Danach erhält der Anbieter die Option in das Kategorienauswahlmenü zurück zu springen oder die Angebotsaufnahme zu beenden.

Der Ansagetext AT wird vorzugsweise innerhalb eines ein individuelles Angebot repräsentierenden Angebotsdatensatzes abgespeichert, der vorzugsweise eine den jeweiligen Anbieter identifizierende Anbieterkennung, eine die jeweilige Kategorie bzw. Unterkategorie identifizierende Kategorienkennung, eine laufende Angebotsnummer sowie den jeweiligen Angebotstext AT als Sprachdatei umfaßt. Zu jedem individuellen Anbieter kann weiterhin in der Datenbank DB ein Anbieterdatensatz gespeichert sein, der vorzugsweise die Anbieterkennung, den Namen des Anbieters, dessen Rufnummer, dessen PIN-Nummer sowie eine den Aufenthaltsort des Anbieters angebende Ortsinformation umfassen kann.

Bei Auswahl einer der angebotsmodifizierenden Menüpunkte 2, 3 oder 4 des Steuermenüs wird der Anbieter durch die Sprachmenüsteuereinrichtung SST durch ein Angebotsauswahlmenü geführt. Im Rahmen dieses Angebotsauswahlmenüs werden dem Anbieter alle von ihm in der Datenbank bereits hinterlegten Angebote der ausgewählten Kategorie bzw. Unterkategorie zumindest auszugsweise vorgelesen. Der Anbieter wählt daraufhin eines dieser Angebote durch Eingabe einer Auswahlinformation aus, woraufhin die im Steuermenü ausgewählte Änderung am ausgewählten Angebot durchgeführt wird. Im vorliegenden Ausführungsbeispiel wird bei Eingabe der Steuerinformation 2 ein Hotelzimmerangebot freigeschaltet, bei Eingabe der Steuerinformation 3 ein Hotel als besetzt markiert und bei Eingabe der Steuerinformation 4 das betreffende Zimmerangebot gelöscht. Danach erhält der Anbieter die Option in das Kategorienauswahlmenü zurück zu springen oder die Angebotsaufnahme zu beenden.

Alternativ zu einer Angebotsaufnahme über das Sprachkommunikationsnetz SKN kann eine Angebotsaufnahme auch über das Internet, z.B. durch Eintrag des Angebots in eine vom Betreiber der Maklereinrichtung ME zu diesem Zweck bereitgestellte Webseite erfolgen. Über das Internet aufgenommenen Angebote werden ebenfalls in der Datenbank DB gespeichert.

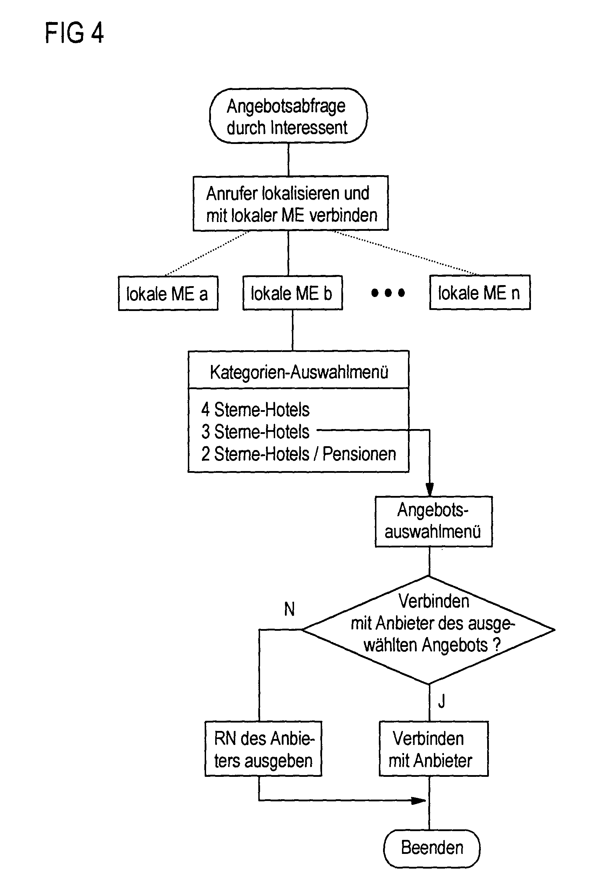

FIG 2 zeigt die Maklereinrichtung ME bei einer Abfrage von Angeboten durch einen von einem beliebigen Endgerät, hier das mobile Endgerät MEG, anrufenden Interessenten. Ergänzend dazu ist in FIG 4 der Ablauf einer Angebotsabfrage durch ein Ablaufdiagramm veranschaulicht. Zur Abfrage von Angeboten richtet ein Interessent einen Anruf über das Sprachkommunikationsnetz SKN an die vorzugsweise über eine einheitliche Rufnummer erreichbare Maklereinrichtung ME. Bei Eintreffen des Anrufs wird der Interessent zunächst mit Hilfe der VLR-Auswerteeinrichtung VLRA lokalisiert und von der Maklereinrichtung ME mit einer für den ermittelten Aufenthaltsort des Interessenten zuständigen, lokalen Maklereinrichtung verbunden. Im vorliegenden Ausführungsbeispiel sei aus Gründen der Übersichtlichkeit angenommen, dass die Maklereinrichtung ME selbst für den Aufenthaltsort des Interessenten zuständig ist. Zur Lokalisierung des Interessenten wird anhand dessen im Rahmen des Verbindungsaufbaus zur Maklereinrichtung ME übermittelten Rufnummer RN durch die VLR-Auswerteeinrichtung VLRA eine VLR-Abfragemeldung VLRR an das Mobilfunknetz des Interessenten gesendet. Dieses Mobilfunknetz wird im vorliegenden Ausführungsbeispiel als Teil des Sprachkommunikationsnetzes SKN betrachtet. Durch die VLR-Abfragemeldung VLRR wird ein Abfragen des sog. Visitor-Location-Registers des Mobilfunknetzes veranlaßt, infolgedessen eine den Aufenthaltsort des Interessenten angebende VLR-Information VLRI vom Mobilfunknetz zur Maklereinrichtung ME übertragen wird. Diese VLR-Information VLRI wird von der VLR-Auswerteeinrichtung VLRA zur Lokalisierung des mobilen Endgerätes MEG ausgewertet.

Bei über ein Festnetzendgerät anrufenden Interessenten kann deren Lokalisierung durch Auswertung ihrer zur Maklereinrichtung ME übermittelten Rufnummer RN durch die Rufnummernauswerteeinrichtung RNA erfolgen.

Nach der Vermittlung zu der für den Interessenten lokal zuständigen Maklereinrichtung ME wird der Interessent durch die Sprachmenüsteuereinrichtung SST durch ein Kategorienauswahlmenü geführt. Für das vorliegende Ausführungsbeispiel sei angenommen, dass der Interessent die Kategorie 'Hotelreservierung' auswählt, woraufhin der Interessent zu einem weiteren Auswahlmenü zur Auswahl einer Unterkategorie geführt wird. Dabei werden dem Interessenten als Unterkategorien 4-Sterne-Hotels, 3-Sterne-Hotels und 2-Sterne-Hotels/Pensionen durch die Sprachmenüsteuerung SST angeboten. Nach Auswahl einer vom Interessenten gewünschten Unterkategorie, hier beispielhaft die Unterkategorie '3-Sterne-Hotels', wird der Interessent durch ein Angebotsauswahlmenü geführt. In diesem Angebotsauswahlmenü werden zum Interessenten abhängig von der erfaßten VLR-Information VLRI die von den jeweiligen Anbietern als frei markierten Zimmerangebote aller 3-Sterne-Hotels ausgegeben, die sich in der Nähe des Interessenten befinden. Bei der Ausgabe der Zimmerangebote wird der jeweilige gespeicherte Angebotstext AT zum Interessenten übermittelt. Die Entfernung zwischen einem Anbieter eines jeweiligen Angebots und dem Interessenten kann dabei anhand der im Anbieterdatensatz des Anbieters hinterlegten Ortsinformation bestimmt werden. Gegebenenfalls können die Zimmerangebote nach der Entfernung zwischen Anbieter und Interessent sortiert ausgegeben werden.

Die Auswahl eines Menüpunktes durch den Interessenten erfolgt analog zu der oben beschriebenen Menüauswahl durch einen Anbieters dadurch, dass der Interessent am mobilen Endgerät MEG eine Auswahlinformation AI eingibt, die zur Maklereinrichtung ME übertragen wird und von der Sprachmenüsteuereinrichtung SST ausgewertet wird.

Um den Interessenten auch gezielt interessentenindividuelle Angebote anbieten zu können, kann in der Datenbank DB für die Interessenten jeweils ein Interessentendatensatz mit einem Benutzerprofil des betreffenden Interessenten gespeichert und verwaltet werden. Das Benutzerprofil wird dabei vorzugsweise der Rufnummer RN des betreffenden Interessenten zugeordnet. Dementsprechend wird bei einem Anruf eines Interessenten anhand der zur Maklereinrichtung ME übermittelten Rufnummer RN des Interessenten die Datenbank DB nach einem dieser Rufnummer RN zugeordneten Benutzerprofil durchsucht. Sofern auf diese Weise ein Benutzerprofil des Interessenten ermittelt wird, können die Kategorien- und Angebotsauswahlmenüs abhängig vom ermittelten Benutzerprofil interessentenindividuell ausgestaltet und ausgegeben werden. Bei jedem Anruf eines Interessenten kann dessen Benutzerprofil abhängig von seinem Abfrageverhalten aktualisiert werden.

Nach Auswahl eines konkreten Angebots durch den Interessenten erhält dieser die Option, eine direkte Verbindung zum Anbieter des ausgewählten Angebots aufzubauen. Falls sich der Interessent durch Eingabe und Übermittlung einer entsprechenden Auswahlinformation AI für eine Direktverbindung mit dem Anbieter entscheidet, wird diese durch die Maklereinrichtung ME aufgebaut; andernfalls wird nur die Rufnummer des ausgewählten Anbieters ausgegeben und anschließend die Verbindung zum Interessenten beendet.

Die vom Interessenten durchgeführten Angebotsabfragen können durch die Maklereinrichtung ME ggf. anbieter- oder angebots-individuell protokolliert werden. Die so erhaltenen Protokollinformationen können von der Maklereinrichtung ME zur Abfrage durch einen jeweiligen Anbieter über das Sprachkommunikationsnetz SKN oder ggf. über das Internet bereitgehalten werden.

Weiterhin kann die Sprachmenüsteuerung auch mehrsprachig erfolgen. Vorzugsweise ist in diesem Fall ein Sprachauswahlmenü zur Auswahl einer jeweiligen Sprache vorzusehen.

## Patentansprüche

1. Maklereinrichtung (ME) zum Aufnehmen und Ausgeben von Angebotsinformationen (AT) über ein Sprachkommunikationsnetz (SKN), mit
a) Aufnahmemitteln (ST, SST, DBS) zum sprachmenügesteuerten Aufnehmen von Angebotsinformationen (AT) von über das Sprachkommunikationsnetz (SKN) anrufenden Anbietern,
b) einer Datenbank (DB) zum Speichern der aufgenommenen Angebotsinformationen (AT) verschiedener Anbieter,
c) Abfragemitteln (ST, SST, DBS) zum sprachmenügesteuerten Abfragen von in der Datenbank (DB) gespeicherten Angebotsinformationen (AT) durch über das Sprachkommunikationsnetz (SKN) anrufende Interessenten, wobei die Angebotsinformationen (AT) jeweils von verschiedenen Interessenten abfragbar sind, und
d) Ausgabemittel (ST, NS) zum Ausgeben der abgefragten Angebotsinformationen (AT) zu einem jeweiligen abfragenden Interessenten.

2. Maklereinrichtung nach Anspruch 1,
**gekennzeichnet durch**
eine Sprachmenü-Steuereinrichtung (SST) zum sprachmenügesteuerten Abfragen einer Steuerinformation von einem über das Sprachkommunikationsnetz (SKN) anrufenden Anbieter und/oder Interessenten.

3. Maklereinrichtung nach Anspruch 2,
**dadurch gekennzeichnet,**
**dass** die Aufnahememittel (ST, SST, DBS) und/oder die Abfragemittel (ST, SST, DBS) Auswahlmittel (ST) zum Auswählen einer Angebotsinformation (AT) abhängig von einer in einer abgefragten Steuerinformation enthaltenen Auswahlinformation (AI) aufweisen.

4. Maklereinrichtung nach Anspruch 2 oder 3,
**dadurch gekennzeichnet,**
**dass** die Angebotsinformationen (AT) in der Datenbank (DB) in unterschiedliche Angebotskategorien eingeteilt sind, und
**dass** die Aufnahememittel (ST, SST, DBS) und/oder die Abfragemittel (ST, SST, DBS) Auswahlmittel (ST) zum Auswählen einer Angebotskategorie abhängig von einer in einer abgefragten Steuerinformation enthaltenen Auswahlinformation (AI) aufweisen.

5. Maklereinrichtung nach einem der vorhergehenden Ansprüche, **gekennzeichnet durch**
Lokalisierungsmittel (VLRA, RNA)zum Erfassen des Aufenthaltsortes eines Anrufers und zum Steuern der Maklereinrichtung (ME) abhängig vom erfassten Aufenthaltort des Anrufers.

6. Maklereinrichtung nach Anspruch 5
**gekennzeichnet durch**
Aufnahmemittel (ST, SST, DBS) zum sprachmenügesteuerten Aufnehmen von Angebotsinformationen (AT) eines Anbieters in Abhängigkeit von dem erfassten Aufenthaltsort des Anbieters.

7. Maklereinrichtung nach Anspruch 5 oder 6, **gekennzeichnet durch**
Abfragemittel (ST, SST, DBS) zum sprachmenügesteuerten Abfragen von Angebotsinformationen (AT) in Abhängigkeit von dem erfassten Aufenthaltsort des Interessenten.

8. Maklereinrichtung nach einem der vorhergehenden Ansprüche, **gekennzeichnet durch**
Authentifizierungsmittel (PINA) zum Prüfen einer von einem anrufenden Anbieter einzugebenden Authentifizierungsinformation (PIN) und zum Erteilen einer Zugriffsberechtigung für den Anbieter bei positivem Prüfungsergebnis.

9. Maklereinrichtung nach einem der vorhergehenden Ansprüche, **gekennzeichnet durch**
Erfassungsmittel (RNA) zum Erfassen von Anschlußidentifizierungsinformationen (RN) von Anrufern und
eine Datenbank (DB), in der einer jeweiligen Anschlußidentifizierungsinformation (RN) eines Anrufers eine individuelle Benutzerprofilinformation zugeordnet ist.

10. Maklereinrichtung nach Anspruch 9,
**gekennzeichnet durch**
Aufnahmemittel (ST, SST, DBS) zum sprachmenügesteuerten Aufnehmen von Angebotsinformationen (AT) in Abhängigkeit von gespeicherten Benutzerprofilinformationen, die einer erfassten Anschlußidentifizierungsinformation (RN) eines jeweiligen Anbieters zugeordnet sind.

11. Maklereinrichtung nach Anspruch 9 oder 10,
**gekennzeichnet durch**
Abfragemittel (ST, SST, DBS) zum sprachmenügesteuerten Abfragen von Angebotsinformationen (AT) in Abhängigkeit von gespeicherten Benutzerprofilinformationen, die einer erfassten Anschlußidentifizierungsinformation (RN) eines jeweiligen Interessenten zugeordnet sind.

12. Maklereinrichtung nach einem der vorhergehenden Ansprüche,
**gekennzeichnet durch**
eine Vermittlungseinrichtung (ST) zum Aufbau einer Verbindung zwischen einem anrufenden Interessenten und einem jeweiligen Anbieter einer vom Interessenten ausgewählten Angebotsinformation (AT) .

13. Maklereinrichtung nach einem der vorhergehenden Ansprüche,
**gekennzeichnet durch**
Protokollierungsmittel zum Protokollieren von Zugriffen auf Angebotsinformationen (AT) eines Anbieters und zum Ausgeben von protokollierten Zugriffsinformationen zu diesem Anbieter.

14. Maklereinrichtung nach einem der vorhergehenden Ansprüche,
**gekennzeichnet durch**
Abrechnungsmittel zum Erfassen von Zugriffen auf die Maklereinrichtung (ME) und zur anbieter- und/oder interessentenindividuellen Gebührenabrechung abhängig von den erfassten Zugriffen.

15. Maklersystem mit mehreren Maklereinrichtungen gemäß einem der vorhergehenden Ansprüche, mit Lokalisierungsmitteln (RNA, VLRA) zum Erfassen des Aufenthaltsortes eines Anrufers und mit
einer Vermittlungseinrichtung (ST) zum Aufbau einer Verbindung zwischen dem Anrufer und einer der Maklereinrichtungen, die für den erfassten Aufenthaltsort des Anrufers zuständig ist.
